(19) Europäisches Patentamt / European Patent Office / Office européen des brevets

(11) **EP 2 151 485 A1**

(12) **EUROPEAN PATENT APPLICATION**
published in accordance with Art. 153(4) EPC

(43) Date of publication:
**10.02.2010 Bulletin 2010/06**

(21) Application number: **08752825.3**

(22) Date of filing: **15.05.2008**

(51) Int Cl.:
*C09J 167/00* $^{(2006.01)}$ *C08J 3/05* $^{(2006.01)}$
*C09J 11/06* $^{(2006.01)}$

(86) International application number:
**PCT/JP2008/058967**

(87) International publication number:
**WO 2008/146615 (04.12.2008 Gazette 2008/49)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **25.05.2007 JP 2007139206**

(71) Applicant: **Nitto Denko Corporation
Ibaraki-shi, Osaka 567-8680 (JP)**

(72) Inventor: **The designation of the inventor has not yet been filed**

(74) Representative: **Grünecker, Kinkeldey,
Stockmair & Schwanhäusser
Anwaltssozietät
Leopoldstrasse 4
80802 München (DE)**

(54) **METHOD FOR PRODUCTION OF POLYESTER EMULSION-TYPE ADHESIVE COMPOSITION**

(57) The present invention relates to a method for producing a polyester-based emulsion type pressure-sensitive adhesive composition including: adding a polyester-based resin to a surfactant phase (D phase) containing water, a polyhydric alcohol and a surfactant to form an O/D type gel emulsion having the surfactant phase (D phase) as a continuous phase; and adding water to the gel emulsion to change the continuous phase from the surfactant phase (D phase) to water, thereby forming an O/W type emulsion, in which the polyester-based resin has an acid value within a range of 1 to 12 mg KOH/g, and the O/D type gel emulsion contains 2 to 8 parts by weight of the polyhydric alcohol, 1 to 5 parts by weight of the surfactant and 0.5 to 15 parts by weight of water, based on 100 parts by weight of the polyester-based resin.

EP 2 151 485 A1

**Description**

TECHNICAL FIELD

The present invention relates to an emulsion type pressure-sensitive adhesive composition using a polyester-based resin composed of a plant-derived material, and relates to a polyester-based pressure-sensitive adhesive composition which is friendly to the human body and the earth environment, and can also be reduced in production cost, because water is used as a dispersion medium.

BACKGROUND ART

In recent years, attention has been attracted to sick house syndrome and the like, and full-scale regulation of VOC (volatile organic compounds) has started, so that increasing attention has been drawn to a movement away from organic solvents. Further, as a measure against exhaustion of fossil resources or global warming, the use of plant-derived materials which are recyclable materials has begun to be recommended.

It is possible to produce biomass polyester-based pressure-sensitive adhesives using no fossil resources by using the plant-derived materials. However, polyester-based resins have an extremely high viscosity, so that organic solvents are used as solvents in their production processes.

However, in recent years, the regulation of VOC has become active, and increasing attention has been drawn to the movement away from organic solvents. So there is emulsification as a means for a measure against VOC.

In acrylic polymers, emulsification by radical polymerization is generally conducted. However, in polyesters, resins are obtained by condensation polymerization, so that emulsification by polymerization is impossible. It is therefore necessary to conduct emulsification after polymerization.

In general, a phase reversal emulsifying method has hitherto been used as an emulsifying method. However, in the case of the phase reversal emulsifying method, it is possible to conduct emulsification by using a general stirrer, but the particle size of emulsion particles obtained becomes large, resulting in failure to obtain satisfactory characteristics. For this reason, when it is intended to obtain a finer particle size, a process such as pressurization becomes necessary, and an apparatus having high shear such as a high-pressure homogenizer becomes necessary. However, this requires expensive equipment investment, and is unfavorable in cost.

In the fields of cosmetics and the like, as a D-phase emulsifying method, it has been known that microparticulation of an emulsion is performed by dispersing an oil component in a surfactant phase (D phase) containing water, a polyhydric alcohol and a surfactant to form an O/D type gel emulsion and adding water to this gel emulsion to form an O/W type emulsion (for example, Patent Documents 1 and 2).

Patent Document 1: JP-A-2005-103421
Patent Document 2: JP-A-2006-169198

DISCLOSURE OF THE INVENTION

However, up to the present, there has been found no example of reports on application of the above-mentioned D-phase emulsifying method to emulsification of a pressure-sensitive adhesive. The reason for this is considered to be that characteristics as the pressure-sensitive adhesive have not been able to be sufficiently exhibited, even though microparticulation of an emulsion has been possible.

In view of such a circumstance, a problem of the invention is to obtain a polyester-based emulsion type pressure-sensitive composition in which a polyester-based resin composed of a plant-derived material is finely and stably emulsion-dispersed by a D-phase emulsifying method using water which is friendly to the human body and the earth environment and can also be reduced in production cost, and being able to conduct emulsification with a general stirring apparatus, and moreover, which causes no deterioration of characteristics due to emulsification and exhibits excellent pressure-sensitive adhesion characteristics (high pressure-sensitive adhesive force and high retention properties).

The present inventors have made intensive studies to the above-mentioned problem. As a result, it has been found that as a method for emulsion-dispersing a polyester-based resin in water by a D-phase emulsifying method, in a first stage in which the polyester-based resin is added as an oil component to a surfactant phase (D phase) containing water, a polyhydric alcohol and a surfactant to form an O/D type gel emulsion having the surfactant phase (D phase) as a continuous phase, when the acid value of the polyester-based resin to be used is set to a specific range and the amounts of the polyhydric alcohol, the surfactant and water to this polyester-based resin are set to specific ranges, an emulsion type pressure-sensitive composition in which the polyester-based resin is finely and stably emulsion-dispersed, and moreover, no deterioration of characteristics due to emulsification is observed and which exhibits excellent pressure-sensitive adhesion characteristics (high pressure-sensitive adhesive force and high retention properties) is obtained by adding water to the above-mentioned gel emulsion to change the continuous phase from the surfactant phase (D phase) to water, thereby forming an O/W emulsion, in a subsequent second stage, thus arriving at completion of the invention.
Namely, the present invention relates to the following items (1) to (7).

(1) A method for producing a polyester-based emulsion type pressure-sensitive adhesive composition including:

adding a polyester-based resin to a surfactant phase (D phase) containing water, a polyhydric alcohol and a surfactant to form an O/D type gel emulsion having the surfactant phase (D phase) as a continuous phase; and adding water to the gel emulsion to change the continuous phase from the surfactant phase (D phase) to water, thereby forming an O/W type emulsion,

in which the polyester-based resin has an acid value within a range of 1 to 12 mg KOH/g, and
the O/D type gel emulsion contains 2 to 8 parts by weight of the polyhydric alcohol, 1 to 5 parts by weight of the surfactant and 0.5 to 15 parts by weight of water, based on 100 parts by weight of the polyester-based resin.
(2) The method for producing a polyester-based emulsion type pressure-sensitive adhesive composition according to (1), in which a plant-derived material is contained in an amount of 35% by weight or more based on the total weight of the polyester-based resin.
(3) The method for producing a polyester-based emulsion type pressure-sensitive adhesive composition according to (1) or (2), in which the polyhydric alcohol is ethylene glycol.
(4) The method for producing a polyester-based emulsion type pressure-sensitive adhesive composition according to any one of (1) to (3), in which the emulsion has an average particle size of 2 $\mu$m or less.
(5) The method for producing a polyester-based emulsion type pressure-sensitive adhesive composition according to any one of (1) to (4), in which a crosslinking agent is incorporated for the polyester-based resin.
(6) The method for producing a polyester-based emulsion type pressure-sensitive adhesive composition according to (5), in which the crosslinking agent is a carbodiimide-based crosslinking agent.
(7) The method for producing a polyester-based emulsion type pressure-sensitive adhesive composition according to (5) or (6), in which a pressure-sensitive adhesive layer after a crosslinking treatment of the composition has a glass transition temperature of -70 to -20°C, and a storage elastic modulus at 23 °C of $1\times10^4$ to $1\times10^6$ Pa.

According to the invention, the polyester-based emulsion type pressure-sensitive composition which exhibits excellent pressure-sensitive adhesion characteristics and in which the polyester-based resin composed of the plant-derived material is finely and stably emulsion-dispersed by using water which is friendly to the human body and the earth environment and can also be reduced in production cost and by the D-phase emulsifying method in which it is possible to conduct emulsification with a general stirring apparatus, can be obtained by setting the acid value of the polyester-based resin used in the first stage by the D-phase emulsifying method to the specific range and setting the amounts of the polyhydric alcohol, the surfactant and water to the polyester resin to the specific ranges.

BEST MODE FOR CARRYING OUT THE INVENTION

In the D-phase emulsifying method of the invention, a surfactant solution containing water, a polyhydric alcohol and a surfactant is prepared as a first stage, and a polyester-based resin as an oil component (O phase) is added to this surfactant phase (D phase) with stirring by an appropriate device such as a three-one motor to form an O/D type gel emulsion having the surfactant phase (D phase) as the continuous phase.
That is to say, basic constituents of the emulsion are the surfactant, the oil component and water. However, in the D-phase emulsifying method, it is intended to finally form an O/W type emulsion having fine emulsion particles by using the polyhydric alcohol as a fourth component.
Although the polyester-based resin used in the invention is obtained by subjecting a dicarboxylic acid and a diol as raw material components to polycondensation reaction in the usual manner, the acid value thereof is set to the range of 1 to 12 mg KOH/g, and further preferably the range of 4 to 8 mg KOH/g, by appropriately selecting the ratio of the above-mentioned raw materials used.
When the acid value of the polyester-based resin is less than 1 mg KOH/g, deterioration in appearance such as white turbidity occurs or stability of the emulsion deteriorates, and further, retention properties of the pressure-sensitive adhesive deteriorate. On the other hand, when the acid value of the polyester-based resin exceeds 12 mg KOH/g, pressure-sensitive adhesion characteristics such as pressure-sensitive adhesive force and retention properties significantly deteriorate by a decrease in the molecular weight of the polyester.
Incidentally, such a polyester-based resin usually has an extremely high viscosity, so that it may be used as a solution obtained by dissolving it in an organic solvent. In this case, desolvation is performed by a device such as a vacuum drier after the formation of the O/W emulsion in the second stage.

Further, the polyester-based resin used in the invention is preferably a biomass polyester-based resin containing a plant-derived material in an amount of 35% by weight or more based on the total weight of raw material components thereof. The plant-derived material is more preferably contained in an amount of 50% by weight or more based on the total weight of raw material components thereof, and particularly preferably contained in an amount of 70% by weight or more based on the total weight of raw material components thereof.

As the raw material components of the polyester-based resin, dicarboxylic acids, diols and the like may be mentioned. Examples of plant-derived dicarboxylic acids include sebacic acid derived from caster oil and a dimer acid obtained from oleic acid or the like. Examples of plant-derived diols include an aliphatic acid ester derived from caster oil and a dimer diol obtained from oleic acid or the like.

As the surfactant used in the first stage, there can be used either an ionic surfactant or a nonionic surfactant. Specific examples thereof include anionic surfactants such as alkyl sulfates, polyoxyethylene alkyl ether sulfates, sulfosuccinates, N-acylamino acid salts, carboxylates and phosphoric acid esters; cationic surfactants such as alkyl ammonium salts; and amphoteric surfactants such as alkyl (amido) betaines and alkyl dimethyl amine oxides.

Examples of the polyhydric alcohols used in the first stage include ethylene glycol, polyethylene glycol, propylene glycol, dipropylene glycol, polypropylene glycol, 1,2-, 1,3- or 1,4-butylene glycol, 2-ethylhexanediol, glycerol, trimethylolpropane, glucose, sucrose, sorbit, pentaerythritol and alkylene oxide adducts thereof. Of these, ethylene glycol is particularly preferred.

In the first stage, as the amounts of the above-mentioned surfactant and polyhydric alcohol and water used, the polyhydric alcohol is used in an amount of 2 to 8 parts by weight, preferably in an amount of 4 to 6 parts by weight, the surfactant is used in an amount of 1 to 5 parts by weight, preferably in an amount of 2 to 3 parts by weight, and water is used in an amount of 0.5 to 12 parts by weight, preferably in an amount of 0.5 to 5.5 parts by weight, based on 100 parts by weight of the polyester-based resin.

When the amount of the surfactant is too small, the O phase separates in the first stage to be liable to cause poor emulsification, and when it is too large, pressure-sensitive adhesive force tends to decrease. When the amount of the polyhydric alcohol is too small, the average particle size of the emulsion in the second stage increases to be liable to cause poor appearance of a pressure-sensitive adhesive layer or deterioration of pressure-sensitive adhesion characteristics, and when it is too large, retention properties tend to deteriorate. Further, when the amount of water is too small, the viscosity becomes high in the first stage, resulting in a tendency to make homogeneous mixing difficult, and when it is too large, the O phase separates in the first stage to be liable to cause poor emulsification at the time when water is added in the second stage.

In the D-phase emulsifying method of the invention, water is added to the above-mentioned O/D type gel emulsion formed in the first stage to change the continuous phase from the surfactant phase (D phase) to water, thereby forming the O/W type emulsion having a fine emulsion particle size, as the second stage. Incidentally, when the organic solvent for dissolving the polyester-based resin is used in the first stage, desolvation is performed by a device such as a vacuum drier after the formation of this O/W emulsion.

The amount of water used in this second stage is 100 parts by weight or more, and preferably from 100 to 200 parts by weight, based on 100 parts by weight of the polyester-based resin. When the amount of water is too small, poor emulsification occurs, which makes it difficult to form emulsion particles. When it is too large, the viscosity of the emulsion becomes low to make it difficult to obtain smooth coating appearance at the time of forming the pressure-sensitive adhesive layer.

In the O/W type emulsion thus obtained, the average particle size of dispersed particles (polyester-based resin) can be easily set to 2 $\mu$m or less, more preferably to 1 $\mu$m or less. For this reason, smooth coating appearance is obtained without the occurrence of problems such as clogging of a coating machine, and stable performance can be exhibited also in terms of pressure-sensitive adhesion characteristics.

Compared with this, when the above-mentioned average particle size exceeds 2 $\mu$m, a coater of the coating machine is clogged with the pressure-sensitive adhesive, so that coating becomes impossible, or even when coating is possible, a surface of the pressure-sensitive adhesive layer formed is roughened, and it is difficult to exhibit stable adhesion characteristics.

In the invention, the above-mentioned O/W type emulsion can be directly used as the polyester-based emulsion type pressure-sensitive adhesive composition. However, when the viscosity of this composition is too low, an appropriate thickener such as an acrylic thickener may be added to thicken the composition.

A tackifying resin or a softener may be incorporated in this polyester-based emulsion type pressure-sensitive adhesive composition according to the necessity. As the tackifying resin, there can be preferably used a plant-derived tackifying resin such as a rosin-based and terpene-based resin. Further, as the softener, there can be preferably used plant-derived oleic acid, linoleic acid, soybean oil or the like.

The polyester-based emulsion type pressure-sensitive adhesive composition of the invention is usually subjected to crosslinking treatment to obtain excellent heat resistance, when the pressure-sensitive adhesive layer is formed therefrom.

The crosslinking treatment can be carried out by incorporating a crosslinking agent for the polyester-based resin to allow a crosslinking reaction to be conducted. As this crosslinking agent, there is used a multifunctional compound having functional groups reactable with functional groups contained in the polyester, such as an oxazoline-based crosslinking agent, a carbodiimide-based crosslinking agent or an epoxy-based crosslinking agent. These crosslinking agents may be used as a combination of two or more thereof. Of the crosslinking agents, the carbodiimide-based crosslinking agent is preferred. The amount of the crosslinking agent used can be appropriately selected.

When the polyester-based emulsion type pressure-sensitive adhesive composition of the invention is used, this is coated on an adherend or between adherends and dried, and further subjected to crosslinking treatment in that case, thereby forming the pressure-sensitive adhesive layer. Furthermore, besides a pattern of usage in such a liquid state, by using various supports or releasable supports, made of porous materials such as plastics such as polyethylene terephthalate films, paper and nonwoven fabrics, the composition is coated on at least one surface thereof to a thickness after drying of 10 to 50 μm by an appropriate coating machine such as a roll coater and dried, and further subjected to crosslinking treatment in that case or thereafter, thereby being able to form the pressure-sensitive adhesive layer to a sheet-like or tape-like pattern.

The pressure-sensitive adhesive layer thus formed has a glass transition temperature of -70 to -20°C, preferably -50 to -30°C, and a storage elastic modulus G' at 23°C of $1\times10^4$ to $1\times10^6$ Pa, preferably $1\times10^5$ to $5\times10^5$ Pa, after the crosslinking treatment.

When the above-mentioned glass transition temperature is less than -70°C, the elastic modulus becomes too low, resulting in a tendency to decrease retention properties, and when it exceeds -20°C, the elastic modulus becomes too high, resulting in a tendency to decrease pressure-sensitive adhesive force. Further, when the storage elastic modulus G' at 23°C is less than $1\times10^4$ Pa, cohesive force decreases, resulting in a tendency to decrease retention properties, and when it exceeds $1\times10^6$ Pa, pressure-sensitive adhesive force tends to decrease.

For the above-mentioned glass transition temperature, a peak value of G" measured using a sample of 3 mm thick $\times$ 8 mm diameter by a measuring apparatus ARES manufactured by Rheometric Scientific Inc. using parallel plates at a frequency of 1 Hz is taken as the glass transition temperature (Tg). Similarly, for the above-mentioned storage elastic modulus, a value of G' at 23°C measured using a sample of 3 mm thick $\times$ 8 mm diameter by a measuring apparatus ARES manufactured by Rheometric Scientific Inc. using parallel plates (for a shear test) at a frequency of 1 Hz is taken as the storage elastic modulus G'.

Examples

The invention will be illustrated in more detail below by describing examples of the invention. Incidentally, "parts" are "parts by weight" in the following.

Further, polyester-based resins used in the following Examples and Comparative Examples are five kinds of polyester-based resins having acid values of 0.5 mg KOH/g, 1 mg KOH/g, 6 mg KOH/g, 12 mg KOH/g and 18 mg KOH/g, and these are synthesized by changing the use rate of a dicarboxylic acid (dimer acid) and a diol (dimer diol) as raw material components in the following synthesis method.

Synthesis Method of Polyester-Based Resin

A three-neck separable flask was equipped with a stirrer, a thermometer and a vacuum pump, and a dimer acid (Pripol 1099 manufactured by Unichema, molecular weight: 567), a dimer diol (Pripol 2033 manufactured by Unichema, molecular weight: 537) and di-n-butyltin oxide (manufactured by Kishida Chemical Co., Ltd.) as a catalyst were charged therein in appropriate amounts. The temperature was increased to 180°C with stirring under reduced-pressure atmosphere, and a reaction was continued for about 12 hours while maintaining this temperature to synthesize a polyester-based resin.

The acid values of the above-mentioned polyester-based resins were measured by the following method.
As a solvent, there was prepared a mixed solution of toluene/isopropyl alcohol (IPA)/distilled water with a weight ratio of 50/49.5/0.5. A sample (0.5 g) was weighed, and dissolved in 50 g of the above-mentioned mixed solution of toluene/IPA/distilled water. This sample was neutralization titrated with KOH by using a titration apparatus, B-900 manufactured by HIRANMA, and the acid value was determined by the following equation:

$$\text{Acid value (mg KOH/g)} = \text{(sample titer–blank titer ml)} \times 5.611 \times \text{KOH titer/sample weight g}$$

Further, the average particle size of O/W type emulsions produced through the first and second stages in the following Examples and Comparative Examples (that is to say, the average particle size of emulsion dispersed particles) was measured by using a laser scattering diffraction method particle size distribution analyzer: LS 13320 (Beckman Coulter™).

Example 1

Based on 100 parts of the polyester-based resin having an acid value of 6 mg KOH/g, 1 part of an anionic surfactant, Hidenol LA-16 (manufactured by Daiichi Kogyo Seiyaku Co., Ltd.), as an emulsifier, 2 parts of ethylene glycol as a polyhydric alcohol and 0.5 part of water were homogeneously dissolved by hand stirring. The polyester-based resin having an acid value of 6 mg KOH/g, which was measured using a solvent containing 50% by weight of toluene, was gradually added thereto while continuing hand stirring to form an O/D type gel emulsion.
Then, 150 parts of water was added by drops into the O/D type gel emulsion obtained in the above-mentioned first stage with stirring by a stirrer to obtain an O/W type emulsion. Thereafter, toluene was removed with a vacuum dryer. In the O/W type emulsion obtained in this second stage, dispersed particles had an average particle size of 2.0 $\mu$m.
To the O/W type emulsion thus obtained, 1 part of a thickener (Aron B-500 manufactured by Toagosei Co., Ltd.) was added, based on 100 parts of solid matter thereof, to thicken it, and further, 20 parts of a carbodiimide-based crosslinking agent (Carbodilite E-40 manufactured by Nikkatsubo) was incorporated therein to prepare a polyester-based emulsion type pressure-sensitive adhesive composition.
This pressure-sensitive adhesive composition was applied onto a 38-$\mu$m thick release-treated polyethylene terephthalate (PET) film to a thickness after drying of 50 $\mu$m, and dried in a circulating air dryer of 105°C for 3 minutes to form a pressure-sensitive adhesive layer, thereby preparing a pressure-sensitive adhesive sheet.

Example 2

An O/W type emulsion having an average particle size of dispersed particles of 2.0 $\mu$m was obtained in the same manner as in Example 1 with the exception that the amount of water in the first stage (at the time of forming the O/D type emulsion) was changed to 5.5 parts. Using this O/W type emulsion, a polyester-based emulsion type pressure-sensitive adhesive composition was prepared, and further, a pressure-sensitive adhesive sheet was prepared, in the same manner as in Example 1.

Example 3

An O/W type emulsion having an average particle size of dispersed particles of 1.2 $\mu$m was obtained in the same manner as in Example 1 with the exception that the amount of the polyhydric alcohol in the first stage (at the time of forming the O/D type emulsion) was changed to 8 parts. Using this O/W type emulsion, a polyester-based emulsion type pressure-sensitive adhesive composition was prepared, and further, a pressure-sensitive adhesive sheet was prepared, in the same manner as in Example 1.

Example 4

An O/W type emulsion having an average particle size of dispersed particles of 2.0 $\mu$m was obtained in the same manner as in Example 2 with the exception that the amount of the polyhydric alcohol in the first stage (at the time of forming the O/D type emulsion) was changed to 8 parts. Using this O/W type emulsion, a polyester-based emulsion type pressure-sensitive adhesive composition was prepared, and further, a pressure-sensitive adhesive sheet was prepared, in the same manner as in Example 1.

Example 5

An O/W type emulsion having an average particle size of dispersed particles of 1.6 $\mu$m was obtained in the same manner as in Example 1 with the exception that the amount of the surfactant in the first stage (at the time of forming the O/D type emulsion) was changed to 5 parts. Using this O/W type emulsion, a polyester-based emulsion type pressure-sensitive adhesive composition was prepared, and further, a pressure-sensitive adhesive sheet was prepared, in the same manner as in Example 1.

Example 6

An O/W type emulsion having an average particle size of dispersed particles of 1.0 $\mu$m was obtained in the same manner as in Example 2 with the exception that the amount of the surfactant in the first stage (at the time of forming the O/D type emulsion) was changed to 5 parts. Using this O/W type emulsion, a polyester-based emulsion type pressure-sensitive adhesive composition was prepared, and further, a pressure-sensitive adhesive sheet was prepared, in the same manner as in Example 1.

Example 7

An O/W type emulsion having an average particle size of dispersed particles of 0.2 $\mu$m was obtained in the same manner as in Example 3 with the exception that the amount of the surfactant in the first stage (at the time of forming the O/D type emulsion) was changed to 5 parts. Using this O/W type emulsion, a polyester-based emulsion type pressure-sensitive adhesive composition was prepared, and further, a pressure-sensitive adhesive sheet was prepared, in the same manner as in Example 1.

Example 8

An O/W type emulsion having an average particle size of dispersed particles of 0.6 $\mu$m was obtained in the same manner as in Example 4 with the exception that the amount of the surfactant in the first stage (at the time of forming the O/D type emulsion) was changed to 5 parts. Using this O/W type emulsion, a polyester-based emulsion type pressure-sensitive adhesive composition was prepared, and further, a pressure-sensitive adhesive sheet was prepared, in the same manner as in Example 1.

Example 9

An O/W type emulsion having an average particle size of dispersed particles of 0.7 $\mu$m was obtained in the same manner as in Example 1 with the exception that the amounts of the surfactant, the polyhydric alcohol and water in the first stage (at the time of forming the O/D type emulsion) were changed to 3 parts, 5 parts and 3 parts, respectively. Using this O/W type emulsion, a polyester-based emulsion type pressure-sensitive adhesive composition was prepared, and further, a pressure-sensitive adhesive sheet was prepared, in the same manner as in Example 1.

Example 10

An O/W type emulsion having an average particle size of dispersed particles of 2.0 $\mu$m was obtained in the same manner as in Example 9 with the exception that the amount of water in the first stage (at the time of forming the O/D type emulsion) was changed to 15 parts. Using this O/W type emulsion, a polyester-based emulsion type pressure-sensitive adhesive composition was prepared, and further, a pressure-sensitive adhesive sheet was prepared, in the same manner as in Example 1.

Example 11

An O/W type emulsion having an average particle size of dispersed particles of 0.7 $\mu$m was obtained in the same manner as in Example 9 with the exception that the polyester-based resin having an acid value of 1 mg KOH/g was used. Using this O/W type emulsion, a polyester-based emulsion type pressure-sensitive adhesive composition was prepared, and further, a pressure-sensitive adhesive sheet was prepared, in the same manner as in Example 1.

Example 12

An O/W type emulsion having an average particle size of dispersed particles of 0.5 $\mu$m was obtained in the same manner as in Example 9 with the exception that the polyester-based resin having an acid value of 12 mg KOH/g was used. Using this O/W type emulsion, a polyester-based emulsion type pressure-sensitive adhesive composition was prepared, and further, a pressure-sensitive adhesive sheet was prepared, in the same manner as in Example 1.

Example 13

An O/W type emulsion having an average particle size of dispersed particles of 0.7 $\mu$m was obtained in the same manner as in Example 9 with the exception that 3 parts of a nonionic surfactant, Emulgen 123P (Kao), was used as the surfactant. Using this O/W type emulsion, a polyester-based emulsion type pressure-sensitive adhesive composition was prepared, and further, a pressure-sensitive adhesive sheet was prepared, in the same manner as in Example 1.

Example 14

An O/W type emulsion having an average particle size of dispersed particles of 0.5 $\mu$m was obtained in the same manner as in Example 9 with the exception that 5 parts of butanediol was used as the polyhydric alcohol. Using this O/W type emulsion, a polyester-based emulsion type pressure-sensitive adhesive composition was prepared, and further, a pressure-sensitive adhesive sheet was prepared, in the same manner as in Example 1.

Comparative Example 1

An O/W type emulsion having an average particle size of dispersed particles of 2.1 $\mu$m was obtained in the same manner as in Example 9 with the exception that the amount of the surfactant was changed to 0.5 part. Using this O/W type emulsion, a polyester-based emulsion type pressure-sensitive adhesive composition was prepared, and further, a pressure-sensitive adhesive sheet was prepared, in the same manner as in Example 1.

Comparative Example 2

An O/W type emulsion having an average particle size of dispersed particles of 0.6 $\mu$m was obtained in the same manner as in Example 9 with the exception that the amount of the surfactant was changed to 6 parts. Using this O/W type emulsion, a polyester-based emulsion type pressure-sensitive adhesive composition was prepared, and further, a pressure-sensitive adhesive sheet was prepared, in the same manner as in Example 1.

Comparative Example 3

An O/W type emulsion having an average particle size of dispersed particles of 2.4 $\mu$m was obtained in the same manner as in Example 9 with the exception that the amount of the polyhydric alcohol was changed to 1 part. Using this O/W type emulsion, a polyester-based emulsion type pressure-sensitive adhesive composition was prepared, and further, a pressure-sensitive adhesive sheet was prepared, in the same manner as in Example 1.

Comparative Example 4

An O/W type emulsion having an average particle size of dispersed particles of 1.2 $\mu$m was obtained in the same manner as in Example 9 with the exception that the amount of the polyhydric alcohol was changed to 9 parts. Using this O/W type emulsion, a polyester-based emulsion type pressure-sensitive adhesive composition was prepared, and further, a pressure-sensitive adhesive sheet was prepared, in the same manner as in Example 1.

Comparative Example 5

An O/W type emulsion having an average particle size of dispersed particles of 0.5 $\mu$m was obtained in the same manner as in Example 9 with the exception that the amount of water was changed to 0.3 part. Using this O/W type emulsion, a polyester-based emulsion type pressure-sensitive adhesive composition was prepared, and further, a pressure-sensitive adhesive sheet was prepared, in the same manner as in Example 1. Incidentally, the O/D type gel emulsion obtained in the first stage became high in viscosity, so that it was difficult to be formed.

Comparative Example 6

An O/W type emulsion having an average particle size of dispersed particles of 2.5 $\mu$m was obtained in the same manner as in Example 9 with the exception that the amount of water was changed to 18 parts. Using this O/W type emulsion, a polyester-based emulsion type pressure-sensitive adhesive composition was prepared, and further, a pressure-sensitive adhesive sheet was prepared, in the same manner as in Example 1.

Comparative Example 7

An O/W type emulsion having an average particle size of dispersed particles of 0.7 $\mu$m was obtained in the same manner as in Example 9 with the exception that the polyester-based resin having an acid value of 0.5 mg KOH/g was used. Using this O/W type emulsion, a polyester-based emulsion type pressure-sensitive adhesive composition was prepared, and further, a pressure-sensitive adhesive sheet was prepared, in the same manner as in Example 1.

Comparative Example 8

An O/W type emulsion having an average particle size of dispersed particles of 0.5 μm was obtained in the same manner as in Example 9 with the exception that the polyester-based resin having an acid value of 18 mg KOH/g was used. Using this O/W type emulsion, a polyester-based emulsion type pressure-sensitive adhesive composition was prepared, and further, a pressure-sensitive adhesive sheet was prepared, in the same manner as in Example 1.

The parts of the surfactants (emulsifiers), polyhydric alcohols and water used in the first stage (at the time of forming the O/D type gel emulsions) in Examples 1 to 14 and Comparative Examples 1 to 8 described above, based on 100 parts of the polyester-based resins, are collectively shown in Table 1 and Table 2. Further, in Table 1 and Table 2, the acid values of the polyester-based resins used are also described together. Furthermore, in the column of the surfactant, "L-16" is Hitenol LA-16 (manufactured by Daiichi Kogyo Seiyaku Co., Ltd.), and "123P" is Emulgen 123P (Kao) as the nonionic surfactant. Moreover, in the column of the polyhydric alcohol, "EG" is ethylene glycol, and "BG" is butylene glycol.

Table 1

| | Acid Value of Polyester-Based Resin (mg KOH/g) | Surfactant | | Polyhydric Alcohol | | Water |
| | | Kind | parts | Kind | parts | parts |
| --- | --- | --- | --- | --- | --- | --- |
| Example 1 | 6 | L-16 | 1 | EG | 2 | 0.5 |
| Example 2 | 6 | L-16 | 1 | EG | 2 | 5.5 |
| Example 3 | 6 | L-16 | 1 | EG | 8 | 0.5 |
| Example 4 | 6 | L-16 | 1 | EG | 8 | 5.5 |
| Example 5 | 6 | L-16 | 5 | EG | 2 | 0.5 |
| Example 6 | 6 | L-16 | 5 | EG | 2 | 5.5 |
| Example 7 | 6 | L-16 | 5 | EG | 8 | 0.5 |
| Example 8 | 6 | L-16 | 5 | EG | 8 | 5.5 |
| Example 9 | 6 | L-16 | 3 | EG | 5 | 3 |
| Example 10 | 6 | L-16 | 3 | EG | 5 | 15 |
| Example 11 | 1 | L-16 | 3 | EG | 5 | 3 |
| Example 12 | 12 | L-16 | 3 | EG | 5 | 3 |
| Example 13 | 6 | 123P | 3 | EG | 5 | 3 |
| Example 14 | 6 | L-16 | 3 | BG | 5 | 3 |

Table 2

| | Acid Value of Polyester-Based Resin (mg KOH/g) | Surfactant | | Polyhydric Alcohol | | Water |
| | | Kind | parts | kind | parts | parts |
| --- | --- | --- | --- | --- | --- | --- |
| Comparative Example 1 | 6 | L-16 | 0.5 | EG | 5 | 3 |
| Comparative Example 2 | 6 | L-16 | 6 | EG | 5 | 3 |
| Comparative Example 3 | 6 | L-16 | 3 | EG | 1 | 3 |
| Comparative Example 4 | 6 | L-16 | 3 | EG | 9 | 3 |
| Comparative Example 5 | 6 | L-16 | 3 | EG | 5 | 0.3 |
| Comparative Example 6 | 6 | L-16 | 3 | EG | 5 | 18 |
| Comparative Example 7 | 0.5 | L-16 | 3 | EG | 5 | 3 |

(continued)

|  | Acid Value of Polyester-Based Resin (mg KOH/g) | Surfactant | | Polyhydric Alcohol | | Water |
|---|---|---|---|---|---|---|
|  |  | Kind | parts | kind | parts | parts |
| Comparative Example 8 | 18 | L-16 | 3 | EG | 5 | 3 |

For the pressure-sensitive adhesive sheets obtained in Examples 1 to 14 and Comparative Examples 1 to 8 described above, the pressure-sensitive adhesive force and retention force were measured by the following methods. The pressure-sensitive adhesive force is preferably 3 N/20 mm width or more. When it is equal to or less than that, there is a possibility that the retention capacity of an adherend decreases. Further, for the retention force, when a displacement of 3 mm or more occurs for 1 hour under an atmosphere of 40°C, there is a possibility of dropping out.

These results are as shown in Table 3 and Table 4. Incidentally, aside from the pressure-sensitive adhesive characteristics, the glass transition temperature Tg of the pressure-sensitive adhesive layers and the storage elastic modulus G' at 23°C were measured. As a result, Tg was about -55°C, and G' was about $3 \times 10^5$ Pa, in Example 1. In the other Examples and the like, it was revealed that Tg and G' were approximately similar thereto.

Incidentally, in Table 3 and Table 4, the average particle size of the O/W type emulsions obtained through the first stage and the second stage are described together for the purpose of reference.

Measurement of Pressure-Sensitive Adhesive Force

A 25-$\mu$m thick PET film subjected to corona treatment was adhered to a surface of the 50-$\mu$m thick pressure-sensitive adhesive layer to which the release-treated PET film was not adhered, thereby preparing a measurement piece. Using this measurement piece, the pressure-sensitive adhesive force was measured based on the pressure-sensitive adhesive force test (180-degree peeling method) of JIS C 2107. However, pressing was performed by one reciprocating motion of a 2-kg roller, a stainless steel plate was used as a test plate, the test plate was adjusted to 20 mm in width, and the stretching speed was 300 mm/min.

Measurement of Retention Force

A 90-$\mu$m thick aluminum tape was laminated on a surface of the 50-$\mu$m thick pressure-sensitive adhesive layer to which the release-treated PET film was not adhered, and cut out to $10 \times 100$ mm. This sample was pressed on a bakelite plate of 125x25x2 mm by one reciprocating motion of a 5-kg roller to laminate it so as to lap $10 \times 20$ mm, thereby preparing a test piece. This test piece was allowed to stand in an atmosphere of 40°C for 30 minutes, and then, a load of 0.5 kg was applied thereto. After standing for 2 hours, the displacement distance of the sample was measured, and half the measured distance was taken as the displacement distance.

Table 3

|  | Average Particle Size ($\mu$m) | Pressure-Sensitive Adhesive Force (N/20 mm width) | Retention Force (mm/hr.) |
|---|---|---|---|
| Example 1 | 2.0 | 12 | 1.0 |
| Example 2 | 2.0 | 9 | 1.0 |
| Example 3 | 1.2 | 15 | 0.5 |
| Example 4 | 2.0 | 14 | 0.5 |
| Example 5 | 1.6 | 9 | 1.0 |
| Example 6 | 1.0 | 11 | 1.0 |
| Example 7 | 0.2 | 14 | 0.5 |
| Example 8 | 0.6 | 11 | 0.5 |
| Example 9 | 0.7 | 11 | 0.5 |
| Example 10 | 2.0 | 12 | 0.5 |
| Example 11 | 0.7 | 10 | 0.5 |
| Example 12 | 0.5 | 5 | 0.1 |
| Example 13 | 0.7 | 10 | 0.2 |
| Example 14 | 0.5 | 11 | 0.2 |

Table 4

| | Average Particle Size (μm) | Pressure-Sensitive Adhesive Force (N/20 mm width) | Retention Force (mm/hr.) |
|---|---|---|---|
| Comparative Example 1 | 2.1 | 12 | 0.5 |
| Comparative Example 2 | 0.6 | 3 | 0.5 |
| Comparative Example 3 | 2.4 | 3 | 3.0 |
| Comparative Example 4 | 1.2 | 9 | 3.0 |
| Comparative Example 5 | 0.5 | 15 | 0.5 |
| Comparative Example 6 | 2.5 | 12 | 0.9 |
| Comparative Example 7 | 0.7 | 15 | Dropped |
| Comparative Example 8 | 0.5 | 4 | Dropped |

As is apparent from the results of Table 1 described above, in the respective polyester-based emulsion type pressure-sensitive adhesive compositions of Examples 1 to 14 of the invention, the average particle size of the O/W type emulsions is as small as 2.0 μm or less, and stable emulsion characteristics are indicated. It can be understood that the pressure-sensitive adhesive sheets which exhibit excellent pressure-sensitive adhesive characteristics satisfying both pressure-sensitive adhesive force and retention force are obtained.
Compared with this, in the respective polyester-based emulsion type pressure-sensitive adhesive compositions of Comparative Examples 1 to 8, the average particle size of the O/W type emulsions became too large to obtain stable emulsion characteristics, or even when the average particle size of the emulsions was small, the emulsions lacked in stability in some cases. Further, the pressure-sensitive adhesive sheets prepared using them were liable to be poor in pressure-sensitive adhesive characteristics such as pressure-sensitive adhesive force and retention force, and fully satisfactory performance was not obtained in many cases.

While the invention has been described in detail with reference to specific embodiments, it will be obvious to those skilled in the art that various changes and modifications can be made without departing from the spirit and scope of the invention.
Incidentally, the invention is based on Japanese Patent Application No. 2007-139206 filed on May 25, 2007, the entire disclosure of which is incorporated herein by reference.
Further, all reference cited herein are incorporated herein by reference in their entirety.

INDUSTRIAL APPLICABILITY

According to the invention, the polyester-based emulsion type pressure-sensitive composition which exhibits excellent pressure-sensitive adhesion characteristics and in which the polyester-based resin composed of the plant-derived material is finely and stably emulsion-dispersed by using water which is friendly to the human body and the earth environment and can also be reduced in production cost and by the D-phase emulsifying method in which it is possible to conduct emulsification with a general stirring apparatus, can be obtained by setting the acid value of the polyester-based resin used in the first stage by the D-phase emulsifying method to the specific range and setting the amounts of the polyhydric alcohol, the surfactant and water to the polyester resin to the specific ranges.

**Claims**

1. A method for producing a polyester-based emulsion type pressure-sensitive adhesive composition comprising:

adding a polyester-based resin to a surfactant phase (D phase) containing water, a polyhydric alcohol and a surfactant to form an O/D type gel emulsion having the surfactant phase (D phase) as a continuous phase; and adding water to the gel emulsion to change the continuous phase from the surfactant phase (D phase) to water, thereby forming an O/W type emulsion,

wherein the polyester-based resin has an acid value within a range of 1 to 12 mg KOH/g, and the O/D type gel emulsion contains 2 to 8 parts by weight of the polyhydric alcohol, 1 to 5 parts by weight of the surfactant and 0.5 to 15 parts by weight of water, based on 100 parts by weight of the polyester-based resin.

2.  The method for producing a polyester-based emulsion type pressure-sensitive adhesive composition according to claim 1, wherein a plant-derived material is contained in an amount of 35% by weight or more based on the total weight of the polyester-based resin.

3.  The method for producing a polyester-based emulsion type pressure-sensitive adhesive composition according to claim 1 or 2, wherein the polyhydric alcohol is ethylene glycol.

4.  The method for producing a polyester-based emulsion type pressure-sensitive adhesive composition according to any one of claims 1 to 3, wherein the emulsion has an average particle size of 2 $\mu$m or less.

5.  The method for producing a polyester-based emulsion type pressure-sensitive adhesive composition according to any one of claims 1 to 4, wherein a crosslinking agent is incorporated for the polyester-based resin.

6.  The method for producing a polyester-based emulsion type pressure-sensitive adhesive composition according to claim 5, wherein the crosslinking agent is a carbodiimide-based crosslinking agent.

7.  The method for producing a polyester-based emulsion type pressure-sensitive adhesive composition according to claim 5 or 6, wherein a pressure-sensitive adhesive layer after a crosslinking treatment of the composition has a glass transition temperature of -70 to -20°C, and a storage elastic modulus at 23°C of $1 \times 10^4$ to $1 \times 10^6$ Pa.

## INTERNATIONAL SEARCH REPORT

| International application No. |
| --- |
| PCT/JP2008/058967 |

A. CLASSIFICATION OF SUBJECT MATTER
*C09J167/00*(2006.01)i, *C08J3/05*(2006.01)i, *C09J11/06*(2006.01)i

According to International Patent Classification (IPC) or to both national classification and IPC

B. FIELDS SEARCHED

Minimum documentation searched (classification system followed by classification symbols)
C09J167/00, C08J3/05, C09J11/06

Documentation searched other than minimum documentation to the extent that such documents are included in the fields searched
Jitsuyo Shinan Koho     1922-1996    Jitsuyo Shinan Toroku Koho    1996-2008
Kokai Jitsuyo Shinan Koho    1971-2008    Toroku Jitsuyo Shinan Koho    1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 11-12452 A (Matsumoto Yushi-Seiyaku Co., Ltd.), 19 January, 1999 (19.01.99), Claims; Par. No. [0013] (Family: none) | 1-7 |
| A | JP 11-92712 A (Showa Highpolymer Co., Ltd.), 06 April, 1999 (06.04.99), Claims; Par. No. [0036] (Family: none) | 1-7 |
| A | JP 2005-103421 A (Shiseido Co., Ltd.), 21 April, 2005 (21.04.05), Claim 9 (Family: none) | 1-7 |

☒ Further documents are listed in the continuation of Box C.    ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>04 August, 2008 (04.08.08) | Date of mailing of the international search report<br>12 August, 2008 (12.08.08) |
| --- | --- |
| Name and mailing address of the ISA/<br>   Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2008/058967

C (Continuation). DOCUMENTS CONSIDERED TO BE RELEVANT

| Category* | Citation of document, with indication, where appropriate, of the relevant passages | Relevant to claim No. |
|---|---|---|
| A | JP 2006-169198 A (Pola Chemical Industries Inc.), 29 June, 2006 (29.06.06), Claim 4 (Family: none) | 1-7 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005103421 A
- JP 2006169198 A

- JP 2007139206 A